# FASCICULE DE BREVET EUROPEEN

(11) **EP 2 925 504 B1**
(45) Date de publication et mention de la délivrance du brevet: **15.04.2020**
(21) Numéro de dépôt: 13808140.1
(22) Date de dépôt: 02.12.2013
(51) Int. Cl.: B29C 49/18, B29C 49/22, B29C 49/04

(54) **PROCÉDÉ DE FABRICATION DE RÉSERVOIRS À CARBURANT PAR SOUFFLAGE**
VERFAHREN ZUR HERSTELLUNG EINES BRENNSTOFFTANKS DURCH BLASFORMEN
METHOD OF MANUFACTURING FUEL TANKS BY BLOW MOULDING

(30) Priorité: 30.11.2012 FR 1261502
(43) Date de publication de la demande: 07.10.2015
(73) Titulaire: Plastic Omnium Advanced Innovation and Research, 1130 Bruxelles (BE)
(72) Inventeur: BOUCAUX, Eric, F-60157 Elincourt Sainte Marguerite (FR); KOSAKO, Seiji, Yokohama-city, Kanagawa (JP)
(74) Mandataire: Remy, Vincent Noel Paul
(86) Numéro de dépôt international: PCT/FR2013/052912
(87) Numéro de publication internationale: WO 2014/083293

(56) Documents cités:
- FR-A- 1 491 546
- JP-A- S55 154 133
- US-A1- 2004 129 708
- US-A1- 2008 006 625
- US-B1- 7 600 652

## Description

La présente invention concerne le domaine technique du soufflage pour la fabrication de réservoirs à carburant en matière plastique.

On connaît plusieurs techniques pour la fabrication de réservoirs à carburant. Par exemple, la demanderesse a déjà développé une technique consistant à fabriquer un réservoir à partir d'une paraison.

Un problème particulier qui peut se poser avec les techniques connues réside dans le fait que les dimensions et formes très complexes des réservoirs rendent difficile la mise en forme de l'extrudât par soufflage dans le moule sans que certaines parties de l'extrudât ne s'étirent excessivement dans les endroits les plus irréguliers du moule.

Or, ces étirements de matière peuvent conduire à des diminutions locales d'épaisseur de la paroi du réservoir. La perméabilité et/ou la résistance du réservoir peut(vent) donc être dégradée(s). Généralement, il est souhaitable d'avoir un réservoir avec une épaisseur de paroi la plus homogène possible.

Le document JP S55 154 133A divulgue un procédé de fabrication d'un réservoir en matière plastique à partir d'un extrudât en feuille. Le procédé consiste notamment à former un déflecteur dans réservoir à partir d'un insert initialement attaché aux parois du moule puis détaché des parois à la fin du procédé. Ceci s'effectue en injectant de l'air à travers l'insert puis en évacuant ce fluide.

L'invention a pour but de proposer un procédé de fabrication d'un réservoir à carburant en matière plastique selon la revendication 1.

Dans un mode de réalisation particulier, on injecte le premier fluide avant que l'extrudât n'entre en contact avec l'une des cavités, ou du moins avant que les parties de l'extrudât que l'on veut préserver d'un étirement inopportun n'entre en contact avec l'une des cavités.

Grâce à l'injection du premier fluide entre l'extrudât et au moins une des cavités, on crée une circulation de ce premier fluide à la surface d'une paroi de la cavité. Cette circulation de fluide permet de créer un coussin de fluide au moins à certains endroits entre ladite paroi et l'extrudât. Un tel coussin de fluide a pour fonction d'empêcher la mise en contact direct de l'extrudât avec la paroi.

Un coussin de fluide selon l'invention permet donc de contrôler l'étirement, c'est-à-dire de maîtriser l'instant précis où l'extrudât entre en contact avec la paroi. Dès lors, on peut obtenir une épaisseur homogène de l'extrudât et, en conséquence, de la paroi du réservoir à carburant.

On entend par extrudât en feuille, dans la présente description, aussi bien un pan de matière plastique, c'est-à-dire globalement une forme à deux grandes dimensions et à épaisseur très petite par rapport à ces grandes dimensions, à d'éventuels plis près, qu'une paraison tubulaire de section transversale quelconque, de préférence fermée. Ce dernier cas, un mode de mise en œuvre particulier de l'invention consiste à effectuer un pré-soufflage de la paraison avant de rapprocher les deux cavités du moule l'une de l'autre, afin de donner une certaine forme à la paraison.

On entend par évacuer le fluide, dans la présente description, le fait :
- de mettre en communication fluidique le milieu contenant ce fluide et l'extérieur du moule et
- de créer un différentiel de pression entre ces deux milieux. Ce différentiel de pression peut être obtenu par aspiration depuis l'extérieur du moule ou par simple mise à la pression atmosphérique, compte tenu de la pression régnant à l'intérieur du moule du fait du soufflage de la paraison.

Par matière plastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé est le polyéthylène. D'excellents résultats ont été obtenus avec du polyéthylène haute densité (PEHD).

Selon l'invention, l'extrudât peut être une feuille ayant une structure résultant de l'empilage de plusieurs couches de compositions de matériaux polymères différents. Une couche souvent utilisée avec avantage dans une telle structure est une couche comprenant au moins un matériau barrière aux liquides et aux gaz, en particulier aux hydrocarbures.

L'invention présente l'avantage d'éviter toute perte d'homogénéité d'un tel empilement de couches de matières différentes constituant la paroi du réservoir. Il n'est donc pas nécessaire augmenter partout l'épaisseur de sa paroi, pour qu'aux endroits les plus étirés, l'empilement de couches formant barrière aux hydrocarbures conserve toute son efficacité.

Grâce à l'invention, le coussin de fluide présent entre l'extrudât et la paroi de la cavité empêche l'extrudât de se coller à la paroi et lui permet en conséquence de glisser sans frottement parallèlement à cette paroi. N'étant pas collé à la paroi, l'extrudât peut s'étirer sur toute son étendue de façon uniforme pour couvrir la surface correspondant à la paroi de la cavité. L'épaisseur de l'extrudât peut donc demeurer homogène en tout point du moule et l'empilement de couches réalisant la barrière aux hydrocarbures conserve son homogénéité et son efficacité.

Il en résulte que l'on peut, grâce à l'invention, fabriquer un réservoir à carburant dont l'épaisseur, qui varie donc très peu d'un emplacement à un autre du réservoir, est très proche de l'épaisseur minimale requise. L'épaisseur requise est en général fixée par le constructeur automobile en fonction de critères normés ou standardisés de résistance, notamment au feu. Une épaisseur minimale requise de 2,5 mm est un exemple courant.

De manière avantageuse, le premier fluide est de l'air, ou un mélange d'air et d'un autre fluide.

Selon un mode de réalisation particulier, on injecte le premier fluide à certains emplacements du moule en fonction de la géométrie de ce dernier. Par exemple, pour un moule présentant une géométrie globalement parallélépipédique, avec notamment des faces globalement planes, on crée le coussin de fluide dans la partie centrale des faces globalement planes. De préférence, on entend par partie centrale la partie de la face se trouvant à une distance supérieure à un tiers de la dimension de la face dans toute direction considérée passant par le milieu de la dite face.

Selon un mode de réalisation particulier, la différence de pression entre le second fluide et le premier fluide est comprise entre 1bar et 2bar, préférentiellement 1,5bar.

Selon un mode de réalisation particulier, on répartit les points d'injection et les conditions d'injection du premier fluide en fonction des zones à protéger d'un risque d'étirement excessif de la paraison. En particulier, on peut injecter le premier fluide entre l'extrudât et la cavité à au moins deux températures différentes, en au moins deux emplacements différents du moule. De même, on peut injecter le second fluide entre l'extrudât et la cavité à au moins deux instants différents.

Dans un mode de réalisation particulier, on munit les points d'injection du premier fluide de moyens permettant le passage du fluide mais empêchant le fluage de la matière constituant l'extrudât. Dans une variante avantageuse de ce mode de réalisation, au moins un des moyens permettant le passage du fluide mais empêchant le fluage de la matière constituant l'extrudât comprend une buse directionnelle permettant de diriger un jet du premier fluide vers un emplacement précis du moule.

Selon un mode de réalisation particulier, on injecte le second fluide du côté de l'extrudât opposé à chaque cavité avant d'évacuer le premier fluide. De cette manière, on optimise l'étirement de l'extrudât étant donné qu'on lui permet de se conformer aussi intimement et précisément que possible à la paroi de la cavité sous l'effet du fluide sous pression, avant de laisser l'extrudât se coller à la cavité au tout dernier moment, lorsque l'on évacue le fluide du fluide sous pression.

Dans un mode de réalisation particulier, on effectue un pré-soufflage de la paraison avant de rapprocher les deux cavités du moule l'une de l'autre, afin de donner une certaine forme à la paraison.

A titre d'exemple, le procédé selon l'invention peut se dérouler sur un cycle de 60 secondes et l'étape d'injection du second fluide du côté de l'extrudât opposé à chaque cavité démarre entre 2 et 6 secondes après l'instant de début de la fermeture du moule.

L'invention a également pour objet un moule pour la fabrication de réservoirs à carburant en matériau polymère par mise en œuvre du procédé décrit ci-dessus. Un tel moulé est caractérisé par la présence d'orifices permettant l'injection du premier fluide entre l'extrudât et la cavité, chaque orifice étant raccordé à un conduit pour la circulation du premier fluide.

L'invention a aussi pour objet un réservoir à carburant obtenu par mise en oeuvre du procédé décrit ci-dessus.

L'invention sera mieux comprise à la lecture des figures annexées, qui sont fournies à titre d'exemples et ne présentent aucun caractère limitatif, dans lesquelles :
- la figure 1 est une vue en élévation d'un réservoir à carburant en matériau polymère obtenu par soufflage ;
- la figure 2 est une section selon II-II du réservoir de la figure 1 ;
- la figure 3 représente une portion d'un moule de soufflage correspondant à la partie III du moule de la figure 2 et une portion d'une paraison en cours de soufflage dans ce moule ;
- la figure 4 est une vue analogue à celle de la figure 3 illustrant le comportement de la paraison lorsqu'on met en oeuvre un procédé de l'état de la technique ;
- la figure 5 est une représentation d'une partie V du réservoir de la figure 1 obtenu par mise en oeuvre du procédé selon l'invention ;
- la figure 6 est une représentation analogue à celle de la figure 5 d'un réservoir obtenu par mise en oeuvre d'un procédé selon l'état de la technique ;
- la figure 7 est une représentation d'évents conventionnels utilisés dans les moules de soufflage ;
- la figure 8 est un schéma en coupe d'un évent directionnel utilisable selon l'invention ;
- la figure 9 est un graphe temporel montrant le séquencement des étapes successives réalisées lors de la mise œuvre d'un procédé décrit en exemple.

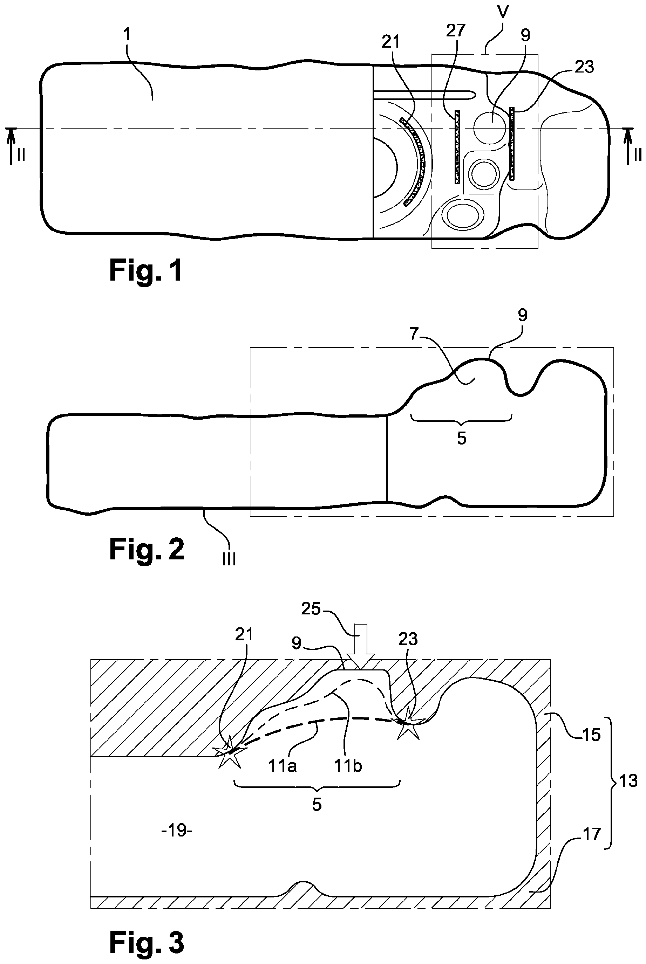

La figure 1 montre un réservoir à carburant 1 en matériau polymère, ici en polyéthylène haute densité, d'un véhicule automobile. Ce réservoir a une contenance de 50 litres. Ses dimensions hors tout sont d'environ 140 cm de long, environ 40 cm de large et environ 40 cm de haut.

Ce réservoir a été obtenu par soufflage d'un extrudât en forme de paraison tubulaire dans un moule de soufflage. La paraison est elle-même obtenue par extrusion juste avant le soufflage. Elle constitue donc un extrudât en feuille, de préférence un multicouche contenant des couches formant barrière aux hydrocarbures. On désignera la paraison indifféremment par les termes de paraison et d'extrudât, compte tenu de son mode d'obtention. L'invention conviendrait aussi à l'utilisation d'extrudâts sous forme de tubes ouverts ou encore de pans. Une ou plusieurs feuilles peuvent être soufflées simultanément dans le moule, en étant soudées ensemble pendant le soufflage ou après le soufflage.

Conformément au procédé connu de soufflage, l'extrudât est présenté entre deux cavités en regard d'un moule ouvert. Ces deux cavités forment, lorsque le moule est refermé, l'empreinte d'un réservoir entier.

Pour conformer la paraison, on injecte un fluide sous pression du côté de l'extrudât opposé à chaque cavité, pour le plaquer contre la paroi de ladite cavité.

Le matériau constituant l'extrudât s'étire et suit la forme du moule, puis, en refroidissant par contact avec la paroi de chaque cavité, se fige et conserve cette forme (au retrait près) pour former la paroi 3 du réservoir.

Sur la figure 2, on voit que la section du moule de la figure 1 est très accidentée. En particulier, une zone 5 prévue pour loger des équipements internes du réservoir comprend, au sommet d'un relief 7, un plateau en disque 9 destiné à être ensuite découpé pour former un siège d'un équipement traversant (tels qu'un clapet, non représenté).

On a représenté à la figure 3 une portion de la paraison ayant servi à fabriquer le moule des figures 1 et 2, à l'aide d'un moule de soufflage 13 à deux cavités 15 et 17 dont l'empreinte 19 délimite exactement le réservoir à obtenir. Cette paraison est représentée sur la figure 3 à deux instants différents du soufflage, par des traits interrompus 11a et 11b.

Dans la première position 11a, la paraison commence à gonfler, sous l'effet de l'injection de fluide sous pression, désigné ci-avant « second fluide », de son côté opposé à la cavité 15. Se gonflant, elle commence par entrer en contact avec la paroi de la cavité 15 en deux lignes de contact 21 et 23 schématisées par des étoiles, qui sont, en cet endroit du moule, des parties saillantes de l'empreinte du moule.

Comme on le voit sur la figure 1 où elles sont schématisées par des traits forts, les lignes de contact 21 et 23 sont respectivement circulaire et rectiligne.

Ces premiers contacts ont pour effet de refroidir la paraison autour de ces deux lignes 21 et 23 et de la coller à la paroi de la cavité au voisinage de ces deux lignes.

La paraison demeure donc libre entre ces deux lignes de contact 21 et 23 mais se trouve contrainte par sa longueur disponible entre ces deux lignes pour se conformer à forme spécifique la zone 5 de la cavité 15.

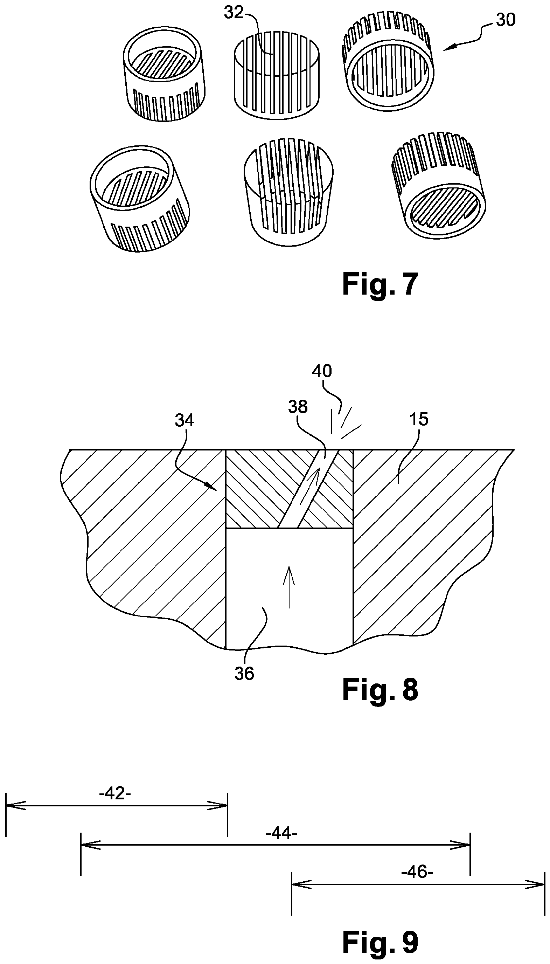

Conformément à l'invention, on a créé une circulation de fluide, ci-avant désigné « premier fluide », lequel est constitué d'air dans l'exemple décrit, à la surface de la paroi de la cavité 15, dans la zone 5, grâce à un évent schématisé par une flèche 25. L'évent 25 est d'un modèle classique, utilisé dans les moules de soufflage pour libérer l'air emprisonné entre la paraison et le moule. Un exemple de tels évents est donné à la figure 7.

Conformément à l'invention, le premier fluide peut être de l'air ou tout autre gaz ou liquide ou un mélange de un ou plusieurs gaz et de un ou plusieurs liquides.

La circulation d'air crée, entre la paraison et la paroi de la cavité dans la zone 5, un coussin d'air qui empêche la mise en contact de ladite paraison avec ladite paroi. Ainsi, comme représenté par la position 11b ultérieure, la paraison se conforme à la forme spécifique de la zone 5 sans se coller en aucune autre partie saillante de cette zone.

En d'autres termes, la circulation d'air crée un coussin d'air entre la paroi de la cavité 15 et l'extrudât pour empêcher la mise en contact direct de l'extrudât avec la paroi au droit du coussin d'air.

De ce fait, l'étirement de la paraison est homogène entre les deux lignes de contact 21 et 23 et aucune réduction excessive d'épaisseur n'est à craindre en certains endroits de la paraison.

Au bout d'un certain délai, qui peut être d'une dizaine de secondes - et est en général compris entre quelques secondes et une vingtaine de secondes - alors qu'on continue l'injection d'air sous pression dans la paraison pour la conformer au moule 13, on stoppe l'injection d'air par l'évent 25 (voire, on aspire l'air par l'évent 25 dans le but d'accélérer l'évacuation) pour provoquer l'évacuation de l'air présent entre la paraison et la paroi de la cavité. Le coussin d'air disparu, la paraison se colle alors à la paroi de la zone 5 de la cavité en tous points de celle-ci, mais sans avoir subi d'étirements trop localisés.

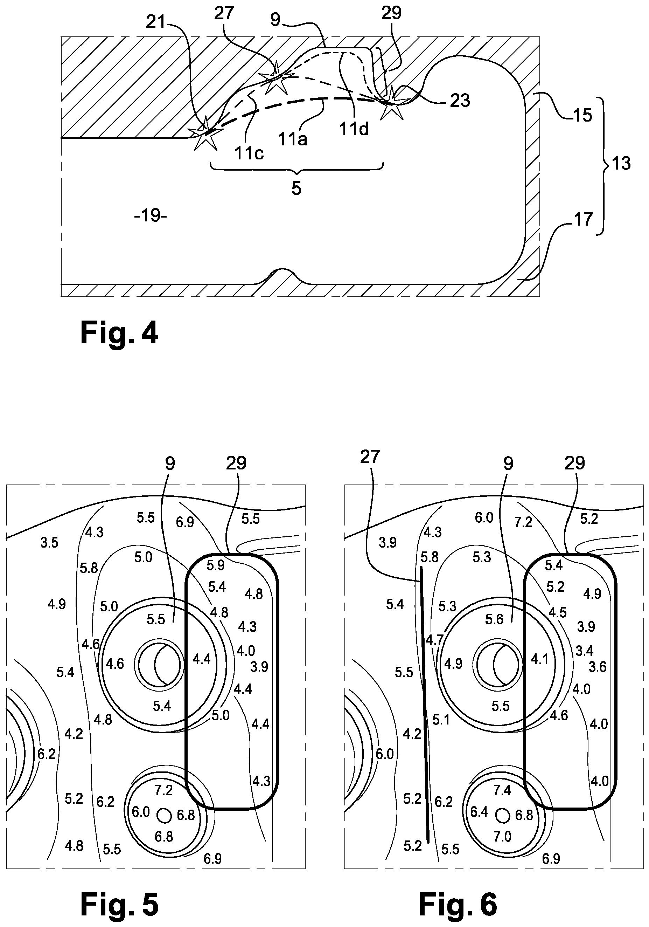

La figure 4 illustre ce que l'on entend par étirement trop localisé.

Sur cette figure, on a représenté le même procédé de soufflage, à la différence près qu'aucun coussin d'air n'est créé entre la paraison et la paroi de la cavité 15. Il s'agit donc d'un procédé de soufflage selon l'état de la technique.

On voit qu'après s'être collée aux deux lignes de contact 21 et 23, la paraison, schématisée par un trait interrompu 11c, pénètre dans la zone 5 et se colle à nouveau à une partie saillante, le long d'une ligne de contact 27 (voir également figure 1). A mesure qu'elle poursuit son gonflage sous l'effet de l'air sous pression injecté pour le soufflage, la paraison se colle progressivement à la paroi de la cavité en partant de la ligne de contact 27 et en direction du disque 9, en disposant d'une surface de plus en plus réduite pour s'étirer en partant de la position schématisée par le trait interrompu 11d. L'étirement est maximum dans la zone 29, entre le disque 9 la ligne de contact 23, qui correspond à la partie de la paraison qui entre en contact le plus tard avec la paroi de la cavité 15.

Le résultat d'un étirement excessif de la paraison est quantifié par les mesures fournies aux figures 5 et 6, sur lesquelles on voit la partie V du réservoir (voir figure 1). En chaque zone ayant fait l'objet d'une mesure, on a inscrit l'épaisseur de la paroi du réservoir.

La figure 5 montre le réservoir obtenu selon l'invention, tandis que la figure 6 montre un réservoir obtenu selon le procédé de l'état de la technique.

Les mesures relevées les plus caractéristiques sont reprises dans le tableau suivant.

| **Région** | **Figure 5** | **Figure 6** |
|---|---|---|
| Ligne 27 | 4,6 ; 4,8 ; 5,0 | 4,7 ; 5,1 ; 5,3 |
| Disque 9 | 4,4 ; 4,6 ; 5,4 ; 5,5 | 4,1 ; 4,9 ; 5,5 ; 5,6 |
| Zone 29 | 3,9 ; 4,0 ; 4,4 | 3,6 ; 3,4 ; 4,1 |

| | | |
|---|---|---|
| L'unité utilisée est le mm. | | |

Il apparaît clairement que, dans la zone 5 et plus spécialement dans les régions du disque 9 et de la zone 29, l'épaisseur de la paraison est beaucoup moins réduite par mise en oeuvre du procédé selon l'invention.

Le séquencement des étapes illustré par le graphe de la figure 9 montre que la phase 42 de rapprochement des deux cavités 15 et 17 du moule démarre avant la phase 44 d'injection de l'air (« premier fluide ») à travers les évents.

Une fois les deux cavités en position finale de moulage, l'étape de rapprochement 42 prend fin et le coussin d'air est maintenu entre l'extrudât et la ou les cavités du moule, par maintien de l'injection de l'air (« premier fluide ») pendant l'étape 44.

On commence l'injection du second fluide, pour le soufflage de l'extrudât dans le moule, par une étape 46 qui débute avant la fin de l'étape 44 d'injection de l'air (« premier fluide ») et soit avant le début de cette étape 44, soit au cours de celle-ci. Si on souhaite pré-souffler l'extrudât pour lui donner du volume avant ou pendant le rapprochement des deux cavités 15 et 17 du moule, l'étape 46 peut avoir démarré avant le début de l'étape 44.

Conformément à l'invention, l'étape 44 d'injection de l'air (« premier fluide ») prend fin après le début de l'étape 46 d'injection du fluide de soufflage (« second fluide »), de manière que le placage de l'extrudât contre les parois des cavités provoqué par le soufflage soit contrôlé par le coussin d'air. La fin de l'étape 44 d'injection de l'air peut consister en un simple arrêt de l'injection d'air ou en une aspiration de l'air à travers les évents.

L'invention permet donc de conserver une meilleure qualité de paroi pour le réservoir, sans avoir à utiliser une paraison excessivement épaisse. Il en résulte une économie de matière et un gain de poids.

Il est donc clair que l'étirement est mieux réparti sur toute la surface de la paraison ayant bénéficié du coussin d'air.

Les évents 30 visibles sur la figure 7 sont des évents conventionnels ayant des fentes 32 suffisamment étroites pour laisser passer l'air tout en empêchant la matière constituant l'extrudât de fluer à travers elles.

Sur la figure 8, on voit un évent directionnel 34 en position dans la paroi de la cavité 15 du moule, à l'intérieur d'un canal de passage d'air 36. On voit que l'évent directionnel possède un petit canal 38 qui débouche, d'une part, dans le canal de passage d'air 36, d'autre part, dans le moule.

L'air injecté dans le canal 36 pénètre dans le petit canal 38, d'où il ressort à l'intérieur du moule sous la forme d'un jet 40.

Un tel évent directionnel 34 permet d'envoyer l'air dans le moule en un emplacement précis pour éviter une mise en contact prématurée de l'extrudât avec la paroi de la cavité. En fonction de la puissance du jet d'air, on pourra prévoir de placer le ou les évents relativement loin des emplacements de la cavité dans lesquels il est souhaitable de créer un coussin d'air.

L'invention n'est pas limitée aux modes de réalisation présentés et d'autres modes de réalisation apparaîtront clairement à l'homme du métier.

## Revendications

1. Procédé de fabrication d'un réservoir à carburant en matière plastique à partir d'au moins un extrudât en feuille, **caractérisé en ce qu'**il consiste à :
- présenter l'extrudât (11) entre deux cavités (15, 17) en regard d'un moule (13) ouvert dont l'empreinte correspond à la forme du réservoir (1) à fabriquer, puis
- rapprocher les deux cavités (15, 17) l'une de l'autre jusqu'à fermeture du moule,
- pendant le rapprochement des deux cavités, injecter un premier fluide d'un côté de l'extrudât situé entre l'extrudât et au moins une cavité (15) dans une zone (5) comprenant, au sommet d'un relief (7), un plateau en disque (9), l'injection du premier fluide s'effectuant à travers un évent situé dans une paroi de la cavité
- injecter un second fluide de l'autre côté de l'extrudât (11),
- évacuer le premier fluide présent entre la cavité et l'extrudât avant la fin de l'injection du second fluide pour plaquer l'extrudât contre la cavité, l'étape d'évacuation du premier fluide consistant en une aspiration depuis l'extérieur du moule ou une mise à la pression atmosphérique, après l'évacuation du premier fluide, la paraison se collant à la paroi de la zone (5) de la cavité (15) en tous points de celle-ci.

2. Procédé selon la revendication 1, dans lequel l'extrudât comprend deux feuilles constituant chacune un pan de matière plastique.

3. Procédé selon la revendication 1, dans lequel l'extrudât comprend un tube constituant une paraison de matière plastique de section transversale quelconque, de préférence fermée.

4. Procédé selon la revendication précédente, dans lequel on effectue un pré-soufflage de la paraison avant de rapprocher les deux cavités du moule l'une de l'autre, afin de donner une certaine forme à la paraison.

5. Procédé selon l'une quelconque des revendications précédentes, dans lequel on injecte le premier fluide entre l'extrudât et la cavité suivant au moins l'une des conditions d'injection suivantes :
- à au moins deux températures différentes ;
- à au moins deux instants différents ;
- en au moins deux emplacements différents du moule.

6. Procédé selon l'une quelconque des revendications précédentes, dans lequel au moins une cavité comprend des moyens permettant le passage du fluide mais empêchant le fluage de la matière constituant l'extrudât.

7. Procédé selon la revendication 6, dans lequel au moins un des moyens permettant le passage du fluide mais empêchant le fluage de la matière constituant l'extrudât comprend une buse directionnelle permettant de diriger un jet du premier fluide vers un emplacement précis du moule.

8. Procédé selon l'une quelconque des revendications précédentes, dans lequel on injecte le second fluide de l'autre côté de l'extrudât avant d'évacuer le premier fluide.

9. Moule pour la fabrication d'un réservoir à carburant en matière plastique par mise en œuvre du procédé selon l'une quelconque des revendications précédentes, **caractérisé par** la présence d'orifices permettant l'injection du premier fluide entre l'extrudât et la cavité, chaque orifice étant raccordé à un conduit pour la circulation du premier fluide.

## Patentansprüche

1. Verfahren zur Herstellung eines Brennstofftanks aus Kunststoff aus wenigstens einem Folien-Extrudat, **dadurch gekennzeichnet, dass** es darin besteht:
- das Extrudat (11) zwischen zwei gegenüberliegenden Hohlräumen (15, 17) eines geöffneten Formwerkzeugs (13) einzubringen, dessen Formhöhlung der Form des herzustellenden Tanks (1) entspricht, und anschließend
- die zwei Hohlräume (15, 17) bis zum Schließen des Formwerkzeugs zusammenzuführen,
- während des Zusammenführens der zwei Hohlräume, ein erstes Fluid auf einer Seite des Extrudats einzuspritzen, die sich zwischen dem Extrudat und wenigstens einem Hohlraum (15) in einer Zone (5) befindet, die, an der Spitze einer Erhöhung (7), eine scheibenförmige Platte (9) umfasst, wobei das Einspritzen des ersten Fluids durch ein Luftloch, das sich in einer Wand des Hohlraums befindet, hindurch erfolgt,
- ein zweites Fluid auf der anderen Seite des Extrudats (11) einzuspritzen,
- das erste Fluid, das zwischen dem Hohlraum und dem Extrudat vorhanden ist, vor dem Ende des Einspritzens des zweiten Fluids auszulassen, um das Extrudat gegen den Hohlraum anzupressen, wobei der Schritt des Ablassens des ersten Fluids in einer Ansaugung von außerhalb des Formwerkzeugs oder einer atmosphärischen Druckbeaufschlagung, nach dem Ablassen des ersten Fluids, besteht, wobei der Vorformling an der Wand der Zone (5) des Hohlraums (15) an allen Stellen davon.

2. Verfahren nach Anspruch 1, bei dem das Extrudat zwei Folien umfasst, die jede eine Fläche aus Kunststoff bilden.

3. Verfahren nach Anspruch 1, bei dem das Extrudat ein Rohr umfasst, das einen Vorformling aus Kunststoff mit beliebigem, vorzugsweise geschlossenem Querschnitt bildet.

4. Verfahren nach dem vorhergehenden Anspruch, bei dem ein Vorblasen des Vorformlings vor dem Zusammenführen der zwei Hohlräume des Formwerkzeugs durchgeführt wird, um dem Vorformling eine bestimmte Form zu verleihen.

5. Verfahren nach einem der vorhergehenden Ansprüche, bei dem das erste Fluid zwischen dem Extrudat und dem Hohlraum gemäß wenigstens einer der folgenden Einspritzbedingungen eingespritzt wird:
- bei wenigstens zwei unterschiedlichen Temperaturen;
- zu wenigstens zwei unterschiedlichen Zeitpunkten;
- an wenigstens zwei unterschiedlichen Stellen des Formwerkzeugs.

6. Verfahren nach einem der vorhergehenden Ansprüche, bei dem wenigstens ein Hohlraum Mittel umfasst, die den Durchtritt des Fluids gestatten, aber das Fließen des Materials, aus dem das Extrudat besteht, verhindern.

7. Verfahren nach Anspruch 6, bei dem wenigstens eines der Mittel, die den Durchtritt des Fluids gestatten, aber das Fließen des Materials, aus dem das Extrudat besteht, verhindern, eine richtungsabhängige Düse umfasst, die das Leiten eines Strahls des ersten Fluids zu einer genauen Stelle des Formwerkzeugs hin gestattet.

8. Verfahren nach einem der vorhergehenden Ansprüche, bei dem das zweite Fluid auf der anderen Seite des Extrudats vor dem Ablassen des ersten Fluids eingespritzt wird.

9. Formwerkzeug zum Herstellen eines Kraftstofftanks aus Kunststoff durch Ausführen des Verfahrens nach einem der vorhergehenden Ansprüche, **gekennzeichnet durch** das Vorhandensein von Öffnungen, die das Einspritzen des ersten Fluids zwischen dem Extrudat und dem Hohlraum gestatten, wobei jede Öffnung mit einer Leitung für die Zirkulation des ersten Fluids verbunden ist.

## Claims

1. A method of manufacturing a plastic fuel tank from at least one sheet-form extrudate, **characterized in that** it consists in:
- offering up the extrudate (11) between two opposing cavities (15, 17) of an open mold (13), the imprint of which corresponds to the shape of the tank (1) that is to be manufactured, then
- bringing the two cavities (15, 17) closer together until the mold is closed,
- while the two cavities are being brought closer together, injecting a first fluid on one side of the extrudate, which side is situated between the extrudate and at least one cavity (15), in a zone (5) comprising, at the top of a relief (7), a disk-shaped plateau (9), the injection of the first fluid being realized through a vent located in a wall of the cavity,
- injecting a second fluid on the other side of the extrudate (11),
- removing the first fluid present between the cavity and the extrudate before the end of injection of the second fluid so as to press the extrudate firmly against the cavity, the step of removing the first fluid consisting in suction from outside the mold or venting to atmospheric pressure, after the removal of the first fluid, the parison sticks to the wall of the zone (5) of the cavity (15) at all points thereof.

2. The method as claimed in claim 1, in which the extrudate comprises two sheets each constituting a slab of plastic.

3. The method as claimed in claim 1, in which the extrudate comprises a tube constituting a plastic parison of any cross section, preferably closed.

4. The method as claimed in the preceding claim, in which the parison is pre-blown before the two cavities of the mold are brought closer together, so as to give the parison a certain shape.

5. The method as claimed in any one of the preceding claims, in which the first fluid is injected between the extrudate and the cavity under at least one of the following injection conditions:
- at at least two different temperatures;
- at at least two different times;
- at at least two different locations of the mold.

6. The method as claimed in any one of the preceding claims, in which at least one cavity comprises means allowing the fluid to pass but preventing the material of which the extrudate is made from flowing.

7. The method as claimed in claim 6, in which at least one of the means allowing the fluid to pass but preventing the material of which the extrudate is made from flowing comprises a directional nozzle allowing a jet of the first fluid to be directed toward a precise location in the mold.

8. The method as claimed in any one of the preceding claims, in which the second fluid is injected on the other side of the extrudate before the first fluid is removed.

9. A mold for manufacturing a plastic fuel tank by implementing the method as claimed in any one of the preceding claims, **characterized by** the presence of orifices that allow the first fluid to be injected between the extrudate and the cavity, each orifice being connected to a pipe for the circulation of the first fluid.
